# EUROPÄISCHE PATENTSCHRIFT

(11) **EP 2 836 416 B1**
(45) Veröffentlichungstag und Bekanntmachung des Hinweises auf die Patenterteilung: **03.08.2016**
(21) Anmeldenummer: 13715665.9
(22) Anmeldetag: 05.04.2013
(51) Int. Cl.: F16C 27/06, F16H 57/039

(54) **LOSLAGER FÜR EIN LENKGETRIEBE**
FLOATING BEARING FOR A STEERING GEAR
PALIER LIBRE POUR MÉCANISME DE DIRECTION

(30) Priorität: 12.04.2012 DE 102012103147
(43) Veröffentlichungstag der Anmeldung: 18.02.2015
(73) Patentinhaber: Robert Bosch Automotive Steering GmbH, 73527 Schwäbisch Gmünd (DE)
(72) Erfinder: FÜCHSEL, Dennis, 73527 Schwäbisch Gmünd (DE); HAFERMALZ, Jens, 73116 Wäschenbeuren (DE)
(86) Internationale Anmeldenummer: PCT/EP2013/057184
(87) Internationale Veröffentlichungsnummer: WO 2013/152996

(56) Entgegenhaltungen:
- DE-A1-102005 035 020
- DE-A1-102007 055 814
- DE-A1-102008 041 112
- DE-A1-102010 003 313

## Beschreibung

Die Erfindung betrifft ein Loslager für ein Lenkgetriebe.

Bei den meisten Kraftfahrzeugen werden Hilfskraftlenksysteme verbaut, die beim Lenken ein unterstützendes Drehmoment erzeugen und dadurch das von dem Fahrer auf die Lenksäule aufzubringende Lenkmoment reduzieren.

Die bekannten Hilfskraftlenksysteme basieren auf einem Lenkgetriebe, das die Antriebsleitung eines hydraulischen oder elektrischen Antriebs übersetzt und auf die Lenksäule überträgt. Derartige Lenkgetriebe sind regelmäßig in Form eines Schraubwälzgetriebes und insbesondere als Schraubradgetriebe oder Schneckengetriebe ausgebildet, d.h. diese umfassen ein Zahnrad, das direkt oder indirekt mit der Lenkstange verbunden ist, sowie ein damit über eine Ritzelwelle von dem Antrieb angetriebenes Ritzel.

Als problematisch bei derartigen Lenkgetrieben hat sich Getriebespiel gezeigt, das sich aufgrund von Bauteiltoleranzen, unterschiedlicher Wärmedehnung der Getriebeelemente und aufgrund von Verschleiß ausbildet. Insbesondere beim sogenannten Wechsellenken, d.h. bei dem direkt aufeinander folgenden Lenken mit wechselndem Lenkeinschlag, erzeugt ein solches Getriebespiel unerwünschte Geräusche, die aus sich abwechselndem Anliegen gegenüberliegender Flanken der Zähne von Ritzel und Zahnrad resultieren.

Bekannt ist, dieses Getriebespiel dadurch zu eliminieren, dass die Ritzelwelle verschwenkbar um eine Achse, die senkrecht zur der Längsachse der Ritzelwelle und in einem Abstand zu dem Verzahnungseingriff von Ritzel und Zahnrad verläuft, gelagert ist und mittels eines oder mehrerer Federelemente gegen das Zahnrad gedrückt wird. Die Verschwenkbarkeit der Ritzelwelle wird dabei in eine der zwei Lagerungen, über die die Ritzelwelle endseitig gelagert ist, integriert. Diese Lagerung wird auch als "Festlager" bezeichnet. Die Lagerung im Bereich des anderen Endes ist dann mit Spiel ausgeführt (sogenanntes "Loslager"), um die durch die Schwenkbewegung hervorgerufene Auslenkung zu ermöglichen. Das Festlager wird regelmäßig antriebsseitig vorgesehen, während das Loslager an dem freien Ende der Ritzelwelle vorgesehen wird. Das oder die Federelemente zum Andrücken des Ritzels an das Zahnrad sind regelmäßig in das Loslager integriert.

Ein solches (gattungsgemäßes) Loslager sowie ein ein solches Loslager umfassendes Lenkgetriebe sind beispielsweise aus der DE 10 2007 055 814 A1 bekannt. Dort umfasst das Loslager einen Innenring, innerhalb dessen ein Abschnitt einer Ritzelwelle des Lenkgetriebes unter Zwischenschaltung eines Wälzlagers gelagert ist, sowie einen Außenring, der in einer Aufnahme eines Gehäuses des Lenkgetriebes aufgenommen ist. Innenring und Außenring bilden zwischen sich einen Ringspalt aus. An einer Stelle des Umfangs sind der Innenring und der Außenring über ein als Steg ausgebildetes Verbindungsteil aus einem elastischen Werkstoff verbunden. Der Ringspalt ermöglicht eine radiale Beweglichkeit von Innenring und Außenring zueinander, während das Verbindungsteil den Zusammenhalt von Innenring und Außenring gewährleistet, ohne die gewünschte radiale Beweglichkeit zwischen diesen zu verhindern.

Nachteilig bei dem aus der DE 10 2007 055 814 A1 bekannten Loslager sind die relativ großen Kräfte, die für eine Relativverschiebung von Innenring zu Außenring infolge der Deformation des Verbindungsteils erforderlich sind.

Des Weiteren zeigt die DE102008041112 die Präambel des Anspruchs 1. Ausgehend von diesem Stand der Technik lag der Erfindung die Aufgabe zugrunde, ein verbessertes Loslager für ein Lenkgetriebe anzugeben. Insbesondere sollte sich das verbesserte Loslager dadurch auszeichnen, dass nur relativ geringe Kräfte zur Relativbewegung von Innenring zu Außenring erforderlich sind.

Diese Aufgabe wird durch ein Loslager gemäß dem unabhängigen Patentanspruch 1 gelöst. Ein ein solches Loslager umfassendes Lenkgetriebe ist Gegenstand des nebengeordneten Patentanspruchs 9. Vorteilhafte Ausführungsformen des erfindungsgemäßen Loslagers sowie des erfindungsgemäßen Lenkgetriebes sind Gegenstand der jeweiligen abhängigen Patentansprüche und ergeben sich aus der nachfolgenden Beschreibung der Erfindung.

Der Erfindung liegt der Gedanke zugrunde, ein gattungsgemäßes Loslager insbesondere hinsichtlich der für die Relativverschiebung von Innenring zu Außenring aufzubringenden Kräfte zu verbessern, indem das Verbindungsteil, über den der Innenring mit dem Außenring beweglich verbunden ist, gelenkförmig ausgebildet ist, so dass die Relativbewegung im Wesentlichen auf einem Abrollen oder Abgleiten von Innenring und Außenring aufeinander beruht. Die Führung der Relativbewegung wird dadurch von dem Innenring und dem Außenring selbst übernommen. Der Einsatz eines flexiblen Werkstoffs, aus dem bei dem Loslager gemäß der DE 10 2007 055 814 A1 noch das gesamte Verbindungsteil ausgebildet ist, kann dadurch auf eine Hülle reduziert werden, die im Wesentlichen lediglich noch den Zusammenhalt von Innenring und Außenring gewährleisten muss und sich durch geringe Deformationskräfte auszeichnen kann.

Dieser Grundgedanke der Erfindung wird strukturell dadurch umgesetzt, dass ein gattungsgemäßes Loslager für ein Lenkgetriebe, das einen Innenring zur (direkten oder indirekten) Aufnahme einer Ritzelwelle des Lenkgetriebes und einen den Innenring umgebenden Außenring zur Lagerung des Loslager in einem Gehäuse des Lenkgetriebes aufweist, wobei der Außenring und der Innenring zwischen sich einen Ringspalt ausbilden und wobei der Außenring und der Innenring derart über mindestens ein flexibles Verbindungsteil miteinander verbunden sind, dass diese in zumindest einer radialen Richtung relativ zueinander beweglich sind, dadurch verbessert wird, dass der Außenring und/oder der Innenring innerhalb des Verbindungsteils (mindestens) einen Vorsprung ausbilden, der in den Ringspalt ragt, so dass der Abstand zwischen Außenring und Innenring im Bereich dieses Vorsprungs geringer als in dem übrigen Abschnitt des Ringspalts ist.

Dabei kann der Vorsprung vorzugsweise einen (zwei- oder dreidimensional) gekrümmten Oberflächenverlauf aufweist.

In einer bevorzugten Ausgestaltung des erfindungsgemäßen Loslagers kann weiterhin vorgesehen sein, dass der Innenring und der Außenring jeweils (mindestens) einen Vorsprung ausbilden, die sich radial gegenüberliegen.

Vorzugsweise kann vorgesehen sein, dass der Innenring und der Außenring im Bereich des Vorsprungs teilweise oder vollständig von einem flexiblen und vorzugsweise elastischen Werkstoff (z.B. Elastomer) umgeben sind. Der flexible Werkstoff kann insbesondere eine den Innenring und den Außenring im Bereich des Vorsprungs bzw. der Vorsprünge umgebende Hülle ausbilden, die den Zusammenhalt von Innenring und Außenring gewährleistet, gleichzeitig jedoch die Relativbewegung zwischen diesen möglichst wenig behindert.

Unter "flexiblem Werkstoff" wird ein Werkstoff verstanden, der bei Kräften deformierbar ist, die (deutlich) unter denjenigen Kräften liegen, bei denen der Innenring und der Außenring entsprechend verformt würden. Insbesondere ist die funktionsgemäße Deformierbarkeit des "flexiblen Werkstoffs" bei Kräften gegeben, die bei gattungsgemäßen Lenkgetriebe zu einem Verschwenken der Ritzelwelle sowie zu der darin begründeten Relativbewegung von Innenring und Außenring führen.

Unter "elastischem Werkstoff" wird ein Werkstoff verstanden, dessen Elastizitätsmodul (deutlich) geringer als der/die Elastizitätsmodul(n) des/der Werkstoffs/-e von Innenring und Außenring ist. Insbesondere ist der Elastizitätsmodul des "elastischen Werkstoffs" so gering, dass dieser bei den Kräften, die bei gattungsgemäßen Lenkgetriebe ein Verschwenken der Ritzelwelle bewirken, zu der funktionsgemäßen Deformation und der dadurch ermöglichten Relativbewegung von Innenring und Außenring führt.

In einer weiterhin bevorzugten Ausgestaltung des erfindungsgemäßen Loslagers kann vorgesehen sein, dass der Innenring (vorzugsweise auf seiner Innenseite) und/oder der Außenring (vorzugsweise auf seiner Außenseite) mindestens eine Vertiefung ausbildet, in der der flexible Werkstoff angeordnet ist. Dadurch kann zum einen eine formschlüssige Verbindung zwischen dem Innen- und/oder dem Außenring sowie dem flexiblen Werkstoff selbst ausgebildet werden, die den Zusammenhalt von Innen- und Außenring verbessert. Zudem kann durch die Anordnung des flexiblen Werkstoffs in den Vertiefungen die Integration des Loslagers in das Gehäuse des Lenkgetriebes vereinfacht werden, insbesondere dann, wenn - wie vorzugsweise vorgesehen - der flexible Werkstoff den Rand der Vertiefung(en) nicht überragt.

Vorzugsweise kann vorgesehen sein, dass sich der Innenring und der Außenring des erfindungsgemäßen Loslagers im Bereich des Vorsprungs bzw. der Vorsprünge berühren, wodurch diese bei der Relativbewegung direkt aufeinander abrollen oder abgleiten.

Es kann jedoch auch eine (dünne) Schicht aus einem flexiblen Werkstoff, bei dem es sich auch um denselben Werkstoff handeln kann, der den Innenring und den Außenring umgibt, im Bereich des Vorsprungs zwischen dem Innenring und dem Außenring vorgesehen sein. Deren Dicke beträgt dabei an ihrer dünnsten Stelle, bei der es sich um die Stelle handelt, an der der Abstand zwischen dem Innen- und dem Außenring am geringsten ist, vorzugsweise maximal 0,5 mm, besonders bevorzugt maximal 0,3 mm. In Abhängigkeit von dem flexiblen Werkstoff kann eine solche Schicht die Reibung zwischen den dann lediglich indirekt aufeinander abrollenden oder abgleitenden Innen- und Außenringen verringern. Eine solche dünne Schicht kann auf einfache Weise dadurch hergestellt werden, dass die den Innen- und Außenring umgebende Hülle durch Umspritzen mit dem flexiblen Werkstoff hergestellt wird, wobei sich - infolge von Spiel zwischen Innenring und Außenring und/oder infolge einer Deformation von Außenring und/oder Innenring bei den beim Spritzgießen herrschenden Drücken - der der Schichtdicke entsprechende Abstand zwischen Innen- und Außenring im Bereich des/der Vorsprungs/Vorsprünge einstellt.

Ein erfindungsgemäßes Lenkgetriebe umfasst zumindest ein Zahnrad, ein damit kämmendes Ritzel und eine das Ritzel umfassenden Ritzelwelle, wobei die Ritzelwelle auf der einen Seite des Ritzels in einem Festlager gelagert ist, das eine Schwenkachse für die Ritzelwelle ausbildet, die quer zur Längsachse der Ritzelwelle liegt, und wobei die Ritzelwelle auf der anderen Seite des Ritzels in einem erfindungsgemäßen Loslager gelagert ist.

In einer bevorzugten Ausgestaltung des erfindungsgemäßen Lenkgetriebes umfasst der Innenring und/oder der Außenring mindestens einen Vorsprung, der zur vorzugsweise eindeutigen Positionierung des Loslagers in einem Gehäuse des Lenkgetriebes in eine vorzugsweise komplementär ausgebildete Vertiefung des Gehäuses eingreift. Dabei ist besonders bevorzugt vorgesehen, dass der Vorsprung sich in axialer Richtung des Innenrings oder des Außenrings erstreckt. Dadurch kann die Herstellung der dazu komplementären Vertiefung in dem Gehäuse vereinfacht werden.

Die Erfindung wird nachfolgend anhand eines in den Zeichnungen dargestellten Ausführungsbeispiels näher erläutert.

In den Zeichnungen zeigt:
- Fig. 1:: ein erfindungsgemäßes Lenkgetriebe in einem ersten Querschnitt;
- Fig. 2:: das Lenkgetriebe der Fig. 1 in einem zweiten Querschnitt;
- Fig. 3:: die Funktion des Lenkgetriebes der Fig. 1 und 2 in einer schematischen Darstellung;
- Fig. 4:: das bei dem Lenkgetriebe der Fig. 1 und 2 zum Einsatz kommende Loslager in einer Aufsicht;
- Fig. 5:: das Loslager der Fig. 4 in einem Längsschnitt entlang der Schnittebene V - V in Fig. 4;
- Fig. 6:: das Loslager der Fig. 4 und 5 in einem Radialschnitt entlang der Schnittebene VI - VI in Fig. 5;

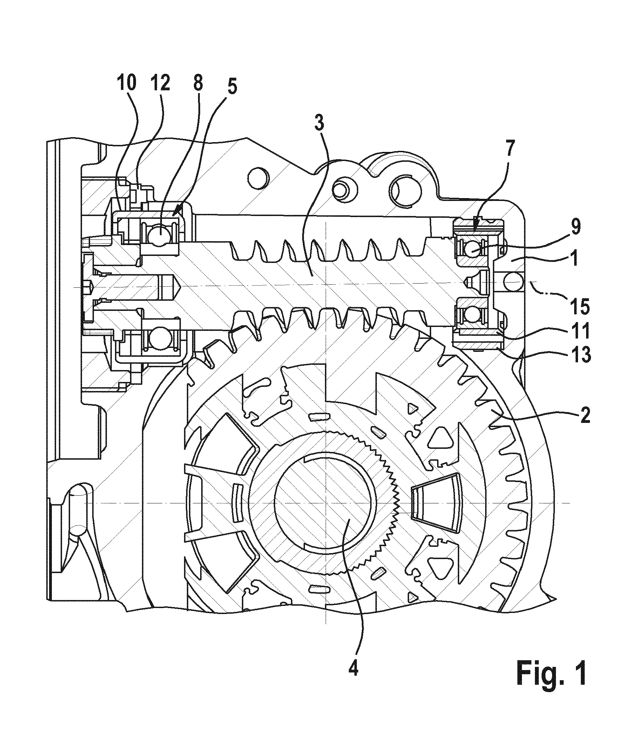

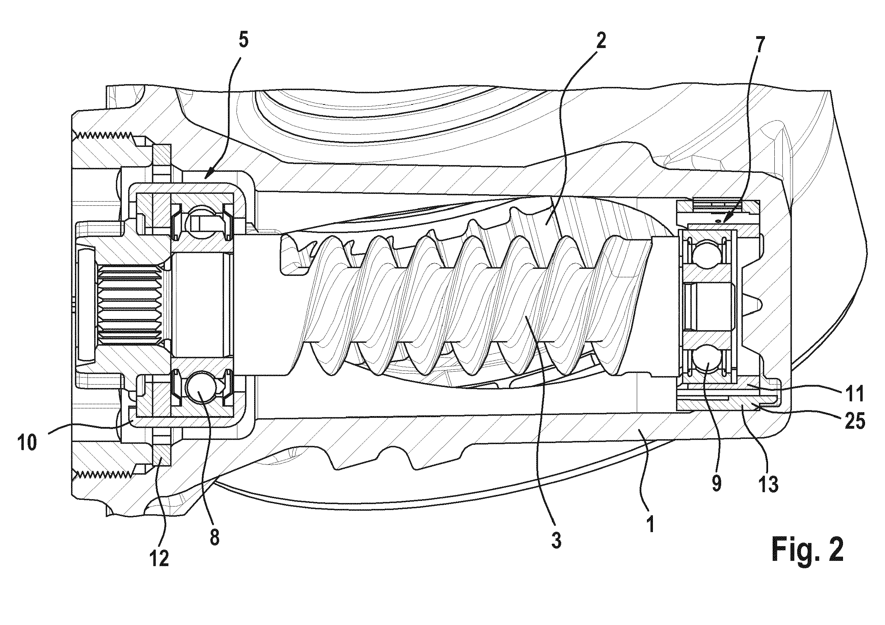

Die Fig. 1 und 2 zeigen die wesentlichen Bestandteile einer Ausführungsform eines erfindungsgemäßen Lenkgetriebes. Dieses umfasst ein Gehäuse 1, innerhalb dessen ein Zahnrad 2 sowie ein mit dem Zahnrad 2 kämmendes Ritzel gelagert sind. Ritzel und eine das Ritzel umfassende Ritzelwelle sind in Form einer Schnecke 3 integral ausgebildet.

Das Zahnrad 2 ist fest auf einer Lenksäule 4 eines Kraftfahrzeugs (nicht dargestellt) befestigt.

Die Schnecke 3 weist ein antriebsseitiges Ende auf, über das diese mit der Abtriebswelle eines nicht dargestellten Antriebs (z.B. Elektromotor) verbindbar ist. Im Bereich dieses antriebsseitigen Endes ist die Schnecke 3 mittels einer ersten Lagerung in dem Gehäuse 1 gelagert. Diese Lagerung umfasst ein Festlager 5, das ein Verschwenken der Schnecke 3 um eine Schwenkachse 6 zulässt.

Dieses Verschwenken bewirkt ein Auslenken des dem antriebsseitigen Ende gegenüberliegenden freien Endes der Schnecke 3, die dort mittels einer zweiten Lagerung in einer Aufnahme des Gehäuses 1 gelagert ist. Die zweite Lagerung umfasst ein erfindungsgemäßes Loslagers 7, das so ausgebildet ist, dass es die Auslenkung des freien Endes der Schnecke 3 zulässt.

Die Lagerungen der Schnecke 4 sowohl im Bereich des Festlagers 5 als auch im Bereich des Loslagers 7 umfassen jeweils ein Wälzlager 8, 9, in denen die entsprechenden Abschnitte der Schnecke 3 weitgehend spielfrei gelagert sind. Die Wälzlager 8, 9 selbst sind in jeweils einem Innenring 10, 11 des Festlagers 5 bzw. des Loslagers 7 gelagert. Festlager 5 und Loslager 7 umfassen zudem jeweils einen den dazugehörigen Innenring 10, 11 umgebenden Außenring 12, 13, die wiederum weitgehend spielfrei in jeweils einer entsprechenden Aufnahme des Gehäuses 1 angeordnet sind. Die Verbindung zwischen Innenring 10, 11 und dazugehörigem Außenring 12, 13 ist konstruktiv so ausgebildet, dass diese - im Fall des Festlagers 5 - das Verschwenken der Schnecke 3 um die Schwenkachse 6 und - im Fall des Loslagers 7 - das Auslenken des freien Endes der Schnecke 3 ermöglichen.

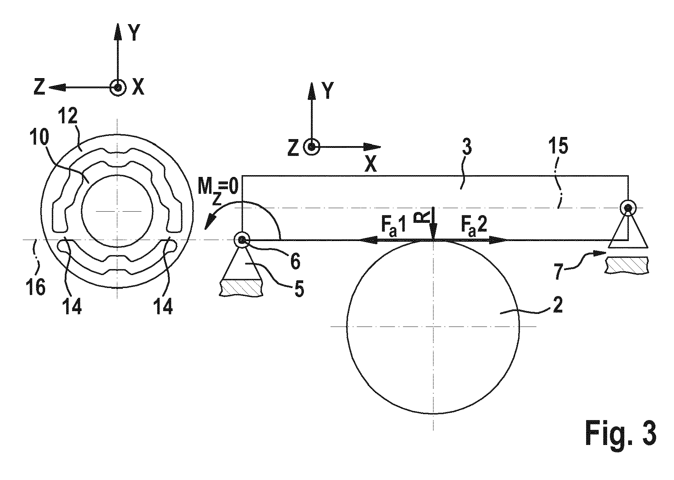

Hierzu ist im Fall des Festlagers 5 der Außenring 12 über zwei Stege 14 (z.B. aus Federstahl) mit dem Innenring 10 verbunden, wobei die zwei Stege 14 weitgehend kollinear verlaufen und dadurch die Schwenkachse 6 ausbilden, um die der Außenring 12 relativ zu dem Innenring 10 verschwenkt werden kann. Die Stege 14 und damit die Schwenkachse 6 verlaufen dabei nicht durch das Zentrum des Festlagers 5, sondern radial versetzt dazu (vgl. Fig. 3). Die Schwenkachse 6 kreuzt somit nicht die Längsachse 15 der Schnecke 3.

Durch diesen radialen Versatz der Stege 14 zu dem Zentrum des Festlagers 5 wird die Schwenkachse 6 in die Nähe des Außenumfangs des Ritzels der Schnecke 3 verlagert, wodurch die Ausbildung von Reaktionsmomenten (M_{z}), die sich infolge der beim Zahneingriff von Ritzel und Zahnrad ergebenden Verzahnungskräfte (Fₐ₁, Fₐ₂) in Verbindung mit dem Abstand der Wirkungslinie der Verzahnungskräfte (Fₐ₁, Fₐ₂) von der Schwenkachse 6 ergeben bzw. ergeben würden, verringert bzw. vermieden werden können. Zur möglichst vollständigen Vermeidung der Reaktionsmomente (M_{z}=0) ist vorgesehen, dass die Schwenkachse 6 innerhalb derjenigen Tangentialebene liegt, die in dem Berührpunkt der beiden Teil- bzw. Wälzkreise von Zahnrad 2 und Ritzel ausgebildet ist ("Verzahnungseingriff" 16), wie dies in der Fig. 3 schematisch dargestellt ist.

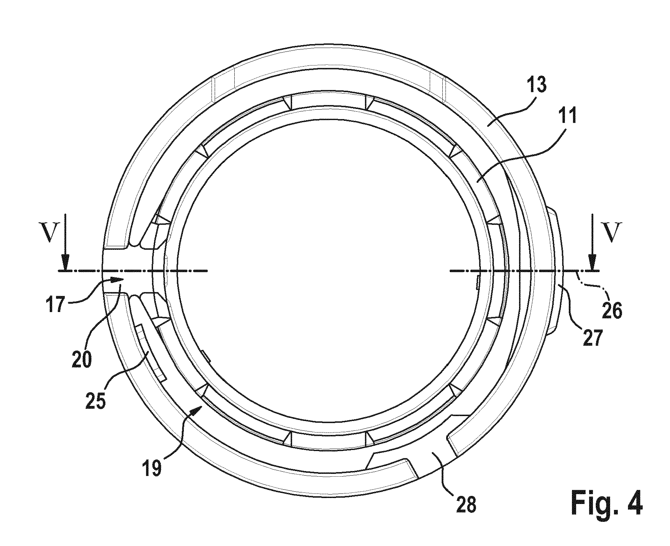

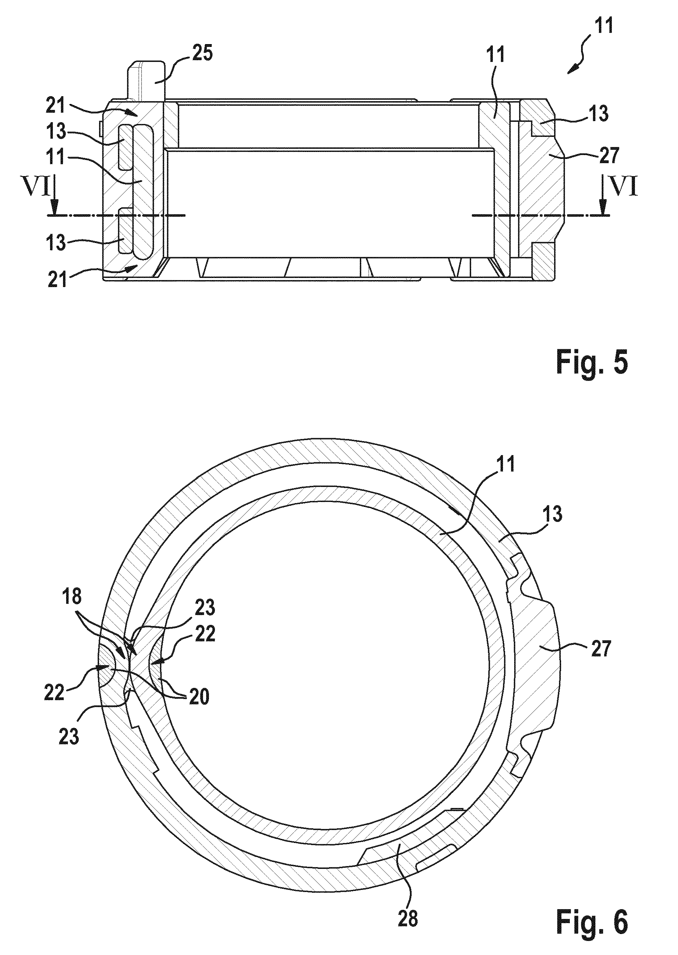

Die Fig. 4 bis 6 zeigen isoliert das erfindungsgemäße Loslager 7 des Lenkgetriebes. Eine wesentliche Funktion des Loslagers 7 liegt darin, die Schnecke so innerhalb des Gehäuses 1 zu lagern, dass die Bewegung (Auslenkung) des freien Endes der Schnecke 3 infolge ihres Verschwenkens um die in dem Festlager 5 ausgebildete Schwenkachse 6 gewährleistet ist. Hierzu ist der Innenring 11 in der unbelasteten Neutralstellung des Loslagers 7 mit einem im Wesentlichen konstanten Abstand konzentrisch innerhalb des Außenrings 13 angeordnet. In einem Abschnitt ist der Innenring 11 über ein radial verlaufendes Verbindungsteil 17 mit dem Außenring 13 verbunden. Im Bereich des Verbindungsteils 17 weisen der Innenring 11 und der Außenring 13 im Radialschnitt (vgl. Fig. 6) jeweils einen gekrümmt verlaufenden Vorsprung 18 auf, die - sich gegenüberliegend - in den zwischen dem Innenring 11 und dem Außenring 13 ausgebildeten Ringspalt 19 ragen. Die Spitzen der beiden Vorsprünge 18 berühren sich dabei.

Im Bereich der Vorsprünge 18 sind der Innenring 11 und der Außenring 13 von einer Elastomerhülle 20 umgeben. Dabei ist die Ausgestaltung der Elastomerhülle 20 derart, dass diese die Außenflächen von Innenring 11 und Außenring 13 nicht überragt. Hierzu ist zum einen die axiale Länge des Innenrings 11 und des Außenrings 13 im Bereich der Vorsprünge 18 kleiner als in den verbliebenen Abschnitten. Dadurch werden Vertiefungen 21 ausgebildet, in denen der elastische Werkstoff der Elastomerhülle 20 aufgenommen ist (vgl. Fig. 5). Der Außenring 13 ist zudem auf halber axialer Länge mit einer Radialöffnung versehen, in der ebenfalls der Werkstoff der Elastomerhülle 20 angeordnet ist (vgl. Fig. 5) Die Fig. 6 zeigt weiterhin, dass der Innenring 11 auf seiner die Schnecke 3 aufnehmenden Innenseite und der Außenring 13 auf seiner Außenseite, über die das Loslager 7 in der dazugehörigen Aufnahme des Gehäuses 1 gelagert ist, jeweils eine weitere, in axialer Richtung verlaufende Vertiefung 22 ausbildet, in denen der Werkstoff der Elastomerhülle 20 ebenfalls aufgenommen ist. Durch die Anordnung des Werkstoffs der Elastomerhülle 20 in den Vertiefungen 21, 22 kann verhindert werden, dass dieser die entsprechend benachbarten Bereiche von Innenring 11 und Außenring 13 überragt, wodurch die Integration des Loslagers 7 in das Lenkgetriebe vereinfacht wird.

Auch im Bereich des Ringspalts 19 sind die Vorsprünge 18 beidseitig (in Umfangsrichtung) von elastischem Werkstoff 23 umgeben. Hierbei handelt es sich vorzugsweise um denselben Werkstoff aus dem auch die Elastomerhülle 20 ausgebildet ist. Der elastische Werkstoff 23 im Bereich des Ringspalts 19 bewirkt in Verbindung mit der Elastomerhülle 20 den Zusammenhalt von Innenring 11 und Außenring 13. Die Elastomerhülle 20 und der im Ringspalt 19 angeordnete elastische Werkstoff 23 können in einem Arbeitsgang, beispielsweise durch (Zweikomponenten-) Spritzgießen hergestellt werden.

Das Verbindungsteil 17 bildet ein Schwenkgelenk mit geringem Schwenkmoment aus, das ein Verschwenken von Außenring 13 zu Innenring 11 um eine im Bereich des Verbindungsteils 17 liegende Schwenkachse ermöglicht. Bei dieser Schwenkbewegung gleiten bzw. wälzen der Außenring 13 und der Innenring 11 in den sich berührenden Abschnitten aufeinander ab, während die Elastomerhülle 20 und der in dem Ringspalt 19 vorgesehene elastische Werkstoff 23 diese Relativbewegung von Außenring 13 und Innenring 11 nicht wesentlich behindert, gleichzeitig jedoch deren Zusammenhalt gewährleistet.

Der Innenring 11 des Loslagers 7 weist noch einen Bund auf. Dieser dient der axialen Positionierung des Wälzlager 9 und damit der Schnecke 3 in dem Gehäuse 1.

Weiterhin weist der Außenring 13 des Loslagers 7 an einer Stelle seines Umfangs noch einen in axialer Richtung vorstehenden Positioniervorsprung 25 auf. Dieser greift in eine entsprechend Aussparung des Gehäuses 1 ein (vgl. Fig. 2). Dadurch wird eine eindeutige Positionierung des Loslagers 7 in dem Gehäuse 1 gewährleistet. Zudem verhindert der Positioniervorsprung ein Verdrehen des Außenrings 13 in dem Gehäuse 1.

Vorgesehen ist, das Loslager 7 derart in das Gehäuse 1 des Lenkgetriebes zu integrieren, dass das Verschwenken der Schnecke 3 um die in dem Festlager 5 ausgebildete Schwenkachse 6 zu einem Verschieben des Innenrings 11 relativ zu dem Außenring 13 in einer Richtung führt, die im wesentlichen senkrecht zu der durch das Verbindungsteil 17 führenden Radialachse 26 ist. In der zu dieser Richtung senkrechten Richtung, d.h. in Richtung der durch das Verbindungsteil 17 führenden Radialachse 26 des Loslagers 7, soll dagegen möglichst keine Verschiebbarkeit von Außenring 13 zu Innenring 11 möglich sein, um ein Verschränken des Ritzels der Schnecke 3 auf dem Zahnrad 2 im Betrieb des Lenkgetriebes zu vermeiden. Dies wird dadurch erreicht, dass der Abstand zwischen dem Innenring 11 und dem Außenring 13 in dem dem Verbindungsteil 17 radial gegenüberliegenden Abschnitt des Loslagers 7 auf ein kleines Maß von z.B. 0,1 mm begrenzt ist. Dies erfolgt mittels eines Begrenzungselements 27, das in radialer Richtung verschiebbar innerhalb des Außenrings 13 gelagert ist. Das Begrenzungselement 27 weist eine radiale Breite auf, die größer als die radiale Breite des Außenrings 13 ist, wobei sich das Begrenzungselement 27 des noch nicht in dem Gehäuse 1 montierten Loslagers 7 soweit nach außen verschieben lässt, dass dieses die Außenfläche des Außenrings 13 überragt. Dadurch stellt sich ein relativ großer Abstand zwischen der Außenseite des Innenrings 11 und dem Begrenzungselement 27 ein. Dieser Abstand wird bei der Montage des Loslagers 7 in dem Gehäuse 1 auf das gewünschte kleine Maß reduziert, da dann das Begrenzungselement 27 infolge einer Kollision mit dem Gehäuse 1 die Außenfläche des Außenrings 13 nicht mehr überragen kann und folglich in Richtung des Innenrings 11 verschoben sein muss.

Der Außenring 13 des Loslagers 7 umfasst weiterhin noch ein elastisches Anschlagelement 28, das eine Bewegung des Innenrings 11 bei einem Verschwenken der Schnecke 3 in einer Richtung (in der Fig. 1 nach oben) begrenzt. Dieses elastische Anschlagelement 28, das beispielsweise als Metallfeder oder als Kombination aus Metallfeder und Elastomerfeder ausgebildet sein kann, kann auch in den Innenring 11 integriert sein.

Das erfindungsgemäße Lenkgetriebe bewirkt einen Ausgleich eines Getriebespiels, wie es sich insbesondere durch Fertigungstoleranzen der Bauteile des Lenkgetriebes, durch unterschiedliche thermische Dehnungen dieser Bauteile und durch Verschleiß einstellen kann. Dieser Getriebespielausgleich wird dadurch erreicht, dass die Schnecke 3 verschwenkbar gelagert ist und federbelastet gegen das Zahnrad 2 gedrückt wird. Die Federbelastung wird - ebenso wie die Ausbildung der Schwenkachse 6 - insbesondere durch die Stege 14 des Festlagers 5 realisiert, die infolge der Relativverdrehung von Außenring 12 zu Innenring 10 tordiert werden und somit funktional als Torsionsfederstäbe wirken. Um eine hinreichende Federvorspannung zu erreichen, um den über die Lebensdauer des Lenkgetriebes zunehmenden Verschleiß auszugleichen, ist vorgesehen, die Schnecke 3 bei der Neuherstellung des Lenkgetriebes mit einem relativ großen Verschwenkwinkel zu versehen. Dazu ist vorgesehen, die Schnecke 3 so in das Gehäuse 1 zu integrieren, dass deren Längsachse 15 im Bereich des Festlagers 5 einen etwas geringeren Abstand von dem Verzahnungseingriff 16 bzw. der Wirkungslinie der Verzahnungskräfte (Fₐ₁, Fₐ₂) aufweist, als dies im Bereich des Loslagers 7 der Fall ist (vgl. Fig. 1). Dieser Versatz wird durch einen entsprechenden Versatz des Innenrings 10 zu dem Außenring 12 des Festlagers 5 erreicht; diese sind somit nicht exakt konzentrisch angeordnet. Dadurch wird ermöglicht, das Festlager 5 und das Loslager 7 trotz des vorgesehenen Verschwenkwinkels in Aufnahmen des Gehäuses 1 anzuordnen, die konzentrisch angeordnet sind. Dadurch kann die Herstellung des Gehäuses 1 vereinfacht werden.

### Bezugszeichenliste

- 1: Gehäuse
- 2: Zahnrad
- 3: Schnecke
- 4: Lenksäule
- 5: Festlager
- 6: Schwenkachse
- 7: Loslager
- 8: Wälzlager
- 9: Wälzlager
- 10: Innenring des Festlagers
- 11: Innenring des Loslagers
- 12: Außenring des Festlagers
- 13: Außenring des Loslagers
- 14: Steg
- 15: Längsachse der Schnecke
- 16: Verzahnungseingriff
- 17: Verbindungsteil
- 18: Vorsprung
- 19: Ringspalt
- 20: Elastomerhülle
- 21: Vertiefung
- 22: Vertiefung
- 23: elastischer Werkstoff
- 25: Positioniervorsprung

## Patentansprüche

1. Loslager (7) für ein Lenkgetriebe mit einem Innenring (11) zur Aufnahme einer Ritzelwelle des Lenkgetriebes und einem den Innenring (11) umgebenden Außenring (13) zur Lagerung des Loslagers (7) in einem Gehäuse (1) des Lenkgetriebes, wobei der Außenring (13) und der Innenring (11) zwischen sich einen Ringspalt (19) ausbilden und wobei der Außenring (13) und der Innenring (11) derart über mindestens ein flexibles Verbindungsteil (17) miteinander verbunden sind, dass diese in zumindest einer radialen Richtung relativ zueinander beweglich sind, **dadurch gekennzeichnet, dass** der Außenring (13) und/oder der Innenring (11) innerhalb des Verbindungsteils (17) mindestens einen Vorsprung (18) ausbilden, der in den Ringspalt (19) ragt, so dass der Abstand zwischen Außenring (13) und Innenring (11) im Bereich des Vorsprungs (18) geringer als in dem übrigen Abschnitt des Ringspalts (19) ist.

2. Loslager (7) gemäß Anspruch 1, **dadurch gekennzeichnet, dass** der Vorsprung (18) einen gekrümmten Oberflächenverlauf aufweist.

3. Loslager (7) gemäß Anspruch 1 oder 2, **dadurch gekennzeichnet, dass** der Innenring (11) und der Außenring (13) jeweils einen Vorsprung (18) ausbilden, die sich radial gegenüberliegen.

4. Loslager (7) gemäß einem der vorhergehenden Ansprüche, **dadurch gekennzeichnet, dass** der Innenring (11) und der Außenring (13) im Bereich des Vorsprungs (18) von einem flexiblen Werkstoff umgeben sind.

5. Loslager (7) gemäß Anspruch 4, **dadurch gekennzeichnet, dass** der Innenring (11) auf seiner Innenseite und/oder der Außenring (13) auf seiner Außenseite mindestens eine Vertiefung (21) ausbilden, in der der flexible Werkstoff angeordnet ist.

6. Loslager (7) gemäß einem der vorhergehenden Ansprüche, **dadurch gekennzeichnet, dass** sich der Innenring (11) und der Außenring (13) im Bereich des Vorsprungs (18) berühren.

7. Loslager (7) gemäß einem der Ansprüche 1 bis 5, **dadurch gekennzeichnet, dass** zwischen dem Innenring (11) und dem Außenring (13) im Bereich des Vorsprungs (18) eine Schicht aus einem flexiblen Werkstoff vorgesehen ist.

8. Loslager (7) gemäß Anspruch 7, **dadurch gekennzeichnet, dass** der geringste Abstand zwischen Innenring (11) und Außenring (13) und damit die geringste Dicke der Schicht aus flexiblem Werkstoff höchstens 0,5 mm, vorzugsweise höchsten 0,3 mm beträgt.

9. Lenkgetriebe mit einem Zahnrad (2), einem damit kämmenden Ritzel und einer das Ritzel umfassenden Ritzelwelle, wobei die Ritzelwelle auf der einen Seite des Ritzels in einem Festlager (5) gelagert ist, das eine Schwenkachse (6) für die Ritzelwelle ausbildet, die quer zur Längsachse (15) der Ritzelwelle liegt, und wobei die Ritzelwelle auf der anderen Seite des Ritzels in einem Loslager (7) gelagert ist, **dadurch gekennzeichnet, dass** das Loslager (7) gemäß einem der vorhergehenden Ansprüche ausgebildet ist.

10. Lenkgetriebe gemäß Anspruch 9, **dadurch gekennzeichnet, dass** der Innenring (11) und/oder der Außenring (13) einen Positioniervorsprung (25) aufweist, der zur Positionierung des Loslagers (7) in einem Gehäuse (1) des Lenkgetriebes in eine Vertiefung des Gehäuses (1) eingreift.

11. Lenkgetriebe gemäß Anspruch 10, **dadurch gekennzeichnet, dass** der Positioniervorsprung (25) sich in axialer Richtung des Innenrings (11) und/oder des Außenrings (13) erstreckt.

## Claims

1. Floating bearing (7) for a steering gear, having an inner ring (11) for receiving a pinion shaft of the steering gear and having an outer ring (13), which surrounds the inner ring (11), for the mounting of the floating bearing (7) in a housing (1) of the steering gear, wherein the outer ring (13) and the inner ring (11) form an annular gap (19) between them, and wherein the outer ring (13) and the inner ring (11) are connected to one another by way of at least one flexible connecting part (17) so as to be movable relative to one another in at least one radial direction, **characterized in that** the outer ring (13) and/or the inner ring (11) form(s), within the connecting part (17), at least one projection (18) which projects into the annular gap (19) such that the spacing between outer ring (13) and inner ring (11) is smaller in the region of the projection (18) then in the remaining section of the annular gap (19).

2. Floating bearing (7) according to Claim 1, **characterized in that** the projection (18) has a curved surface profile.

3. Floating bearing (7) according to Claim 1 or 2, **characterized in that** the inner ring (11) and the outer ring (13) each form a projection (18), said projections being situated radially opposite one another.

4. Floating bearing (7) according to one of the preceding claims, **characterized in that** the inner ring (11) and the outer ring (13) are surrounded by a flexible material in the region of the projection (18).

5. Floating bearing (7) according to Claim 4, **characterized in that** the inner ring (11), on its inner side, and/or the outer ring (13), on its outer side, form(s) at least one depression (21) in which the flexible material is arranged.

6. Floating bearing (7) according to one of the preceding claims, **characterized in that** the inner ring (11) and the outer ring (13) make contact in the region of the projection (18).

7. Floating bearing (7) according to one of Claims 1 to 5, **characterized in that** a layer of a flexible material is provided between the inner ring (11) and the outer ring (13) in the region of the projection (18).

8. Floating bearing (7) according to Claim 7, **characterized in that** the smallest spacing between the inner ring (11) and outer ring (13), and thus the smallest thickness of the layer of flexible material, is at most 0.5 mm, preferably at most 0.3 mm.

9. Steering gear having a gearwheel (2), having a pinion that meshes with said gearwheel, and having a pinion shaft that comprises the pinion, wherein the pinion shaft is mounted, on one side of the pinion, in a fixed bearing (5) which forms for the pinion shaft a pivot axis (6) lying perpendicular to the longitudinal axis (15) of the pinion shaft, and wherein the pinion shaft is mounted, on the other side of the pinion, in a floating bearing (7), **characterized in that** Floating bearing (7) is designed according to one of the preceding claims.

10. Steering gear according to Claim 9, **characterized in that** the inner ring (11) and/or the outer ring (13) have/has a positioning projection (25) which, for the positioning of the floating bearing (7) in a housing (1) of the steering gear, engages into a depression of the housing (1).

11. Steering gear according to Claim 10, **characterized in that** the positioning projection (25) extends in the axial direction of the inner ring (11) and/or of the outer ring (13).

## Revendications

1. Palier libre (7) pour un mécanisme de direction, comprenant une bague interne (11) destinée à recevoir un arbre de pignon du mécanisme de direction et une bague externe (13) entourant la bague interne (11) pour le support du palier libre (7) dans un boîtier (1) du mécanisme de direction, la bague externe (13) et la bague interne (11) formant entre elles un interstice annulaire (19) et la bague externe (13) et la bague interne (11) étant connectées l'une à l'autre par le biais d'au moins une partie de connexion flexible (17) de telle sorte qu'elles puissent se déplacer relativement l'une par rapport à l'autre dans au moins une direction radiale, **caractérisé en ce que** la bague externe (13) et/ou la bague interne (11) constituent au moins une saillie (18) à l'intérieur de la partie de connexion (17), laquelle pénètre dans l'interstice annulaire (19) de telle sorte que la distance entre la bague externe (13) et la bague interne (11) dans la région de la saillie (18) soit inférieure à la distance dans le reste de la portion de l'interstice annulaire (19).

2. Palier libre (7) selon la revendication 1, **caractérisé en ce que** la saillie (18) présente une surface d'allure courbe.

3. Palier libre (7) selon la revendication 1 ou 2, **caractérisé en ce que** la bague interne (11) et la bague externe (13) constituent à chaque fois une saillie (18), lesquelles saillies sont radialement opposées.

4. Palier libre (7) selon l'une quelconque des revendications précédentes, **caractérisé en ce que** la bague interne (11) et la bague externe (13), dans la région de la saillie (18), sont entourées par un matériau flexible.

5. Palier libre (7) selon la revendication 4, **caractérisé en ce que** la bague interne (11), sur son côté interne, et/ou la bague externe (13), sur son côté externe, présentent au moins un renfoncement (21) dans lequel est disposé le matériau flexible.

6. Palier libre (7) selon l'une quelconque des revendications précédentes, **caractérisé en ce que** la bague interne (11) et la bague externe (13) sont en contact dans la région de la saillie (18).

7. Palier libre (7) selon l'une quelconque des revendications 1 à 5, **caractérisé en ce qu'**entre la bague interne (11) et la bague externe (13) est prévue une couche de matériau flexible dans la région de la saillie (18).

8. Palier libre (7) selon la revendication 7, **caractérisé en ce que** la plus petite distance entre la bague interne (11) et la bague externe (13), et par conséquent la plus petite épaisseur de la couche de matériau flexible, vaut au maximum 0,5 mm, de préférence au maximum 0,3 mm.

9. Mécanisme de direction comprenant une roue dentée (2), un pignon s'engrenant avec celle-ci et un arbre de pignon entourant le pignon, l'arbre de pignon étant supporté sur un côté du pignon dans un palier fixe (5) qui constitue un axe de pivotement (6) pour l'arbre de pignon, qui est situé transversalement à l'axe longitudinal (15) de l'arbre de pignon, et l'arbre de pignon étant supporté de l'autre côté du pignon dans un palier libre (7), **caractérisé en ce que** le palier libre (7) est réalisé selon l'une quelconque des revendications précédentes.

10. Mécanisme de direction selon la revendication 9, **caractérisé en ce que** la bague interne (11) et/ou la bague externe (13) présentent une saillie de positionnement (25) qui s'engage dans un boîtier (1) du mécanisme de direction dans un renfoncement du boîtier (1) en vue du positionnement du palier libre (7).

11. Mécanisme de direction selon la revendication 10, **caractérisé en ce que** la saillie de positionnement (25) s'étend dans la direction axiale de la bague interne (11) et/ou de la bague externe (13).
